Europäisches Patentamt

European Patent Office

Office européen des brevets

(11) Veröffentlichungsnummer: **0 348 597**
A2

## (12) EUROPÄISCHE PATENTANMELDUNG

(21) Anmeldenummer: 89102568.6

(22) Anmeldetag: 15.02.89

(51) Int. Cl.4: **B60P 3/00** , **B60P 3/10**

(30) Priorität: 25.06.88 DE 8808179 U

(43) Veröffentlichungstag der Anmeldung:
03.01.90 Patentblatt 90/01

(84) Benannte Vertragsstaaten:
AT BE CH DE ES FR GB GR IT LI LU NL SE

(71) Anmelder: FAHRZEUGBAU LANGENDORF
GMBH & CO. KG
Bahnhofstrasse 115
D-4355 Waltrop(DE)

(72) Erfinder: Wegner, Alfons
Im Worth 3
D-4716 Olfen(DE)
Erfinder: Langendorf, Heinrich
Bahnhofstrasse 111
D-4355 Waltrop(DE)

(74) Vertreter: Herrmann-Trentepohl, Werner,
Dipl.-Ing. et al
Postfach 1140 Schaeferstrasse 18
D-4690 Herne 1(DE)

(54) Strassentransportfahrzeug mit Transportgestellaufnahme für grossflächige Tafeln, insbes. Glasscheiben.

(57) Bei einem Straßentransportfahrzeug mit Transportgestellaufnahme für großflächige Tafeln, insbesondere Glasscheiben und bordeigener Transportsicherung durch Abstützung gegenüberliegender Langsflächen des auf dem Transportgestell stehenden und schräg nach innen geneigten Transportgutes mit Hilfe mehrerer, den Außenseiten des Transportgutes durch Zustellen auflegbarer und durch Aufstellen lösbarer Stützen, welche den Abtrieb eines fahrzeugfesten Getriebes bilden, denen Bewegungsenergie vorzugsweise durch druckmittelbetätigte Kolben-Zylinderanordnungen zugeführt wird, ist erfindungsgemäß vorgesehen, daß jede Stütze mit einem Schubgelenk ein Getriebe bildet, in dem das hohle Prisma des Schubgelenks fahrzeugfest und das Vollprisma über ein Kugelgelenk an die Stütze angelenkt ist.

Fig. 1

EP 0 348 597 A2

Die Erfindung betrifft ein Straßentransportfahrzeug mit Transportgestellaufnahme für großflächige Tafeln, insbesondere Glasscheiben gemäß dem Oberbegriff des Patentanspruches 1.

Obwohl die Erfindung auf den Straßentransport von Großtafeln, z.B. für den Fertigbau anwendbar ist, wird sie im folgenden anhand ihres hauptsächlichen Anwendungsgebietes näher erläutert. Dabei handelt es sich um den Transport von Float-Glasscheiben mit erheblichen Flächenabmessungen und entsprechenden Gewichten, die solche Scheiben elastisch bis zum Bruch verformen, wenn sie nicht dagegen ausreichend unterstützt werden. Außerdem sind solche Glasscheiben häufig mit einer gegen mechanische Einwirkungen empfindlichen Oberfläche, z.B. mit aufgedampften Metallschichten oder -vergütungen versehen. Der Straßentransport eines derartigen Transportgutes erfolgt über große Entfernungen, z.B. zwischen der Glashütte und dem Handler oder dem Verbraucher. Er verlangt deshalb den Transport einer Vielzahl von Tafeln oder Scheiben mit einem Gesamtgewicht einschließlich des Transportgestells, welches dem Ladegewicht von Aufliegern mit maximal möglichen Abmessungen und Gewichten entspricht. Beim Float-Glasscheibentransport wird das Transportgut mit dem Transportgestell zusammengehalten.

Solche Transportgestelle sind bewegliche Traggerüste, welche in ihrer Längsmitte einen allgemein A-förmigen Aufbau aufweisen, an dessen größeren Seiten die jeweils schräg nach innen geneigten Tafeln bzw. Glasscheibenpakete angelehnt sind, welche auf einem den A-förmigen Transportgestellaufbau unterstützenden Transportgestellunterbau abgesetzt sind. Dieser Unterbau weist beim Glasscheibentransport Längsträger auf, welche mit Längsleisten an der Innenseite der Schenkel des U-förmigen Chassis des Transportfahrzeuges während der Fahrt unterstützt sind. In der Regel handelt es sich bei dem erfindungsgemäßen Straßentransportfahrzeug um einen als Auflieger auf einer Zugmaschine ausgebildeten Anhänger, dessen Hinterräder an der Außenseite der U-Schenkel des Chassis auf Schwingen von Luftfedern befestigt sind. Während der Fahrt werden die U-Schenkel des Chassis durch eine Tür zusammengehalten, welche zusammen mit einem einer Planenabdeckung einen verschließbaren Laderaum bildet, der das Ladegut vor Verschmutzungen und Beschädigungen von außen schützt. Diese der Erfindung bevorzugt zugrundeliegenden Fahrzeuge haben den Vorteil, daß sie ohne Einsatz von Hilfsmitteln die beschriebenen Transportgestelle auf- und abladen können, indem sie bei geöffneter Türe und weitgehend entlasteten Luftfedern mit ihren Leisten unter die hohl liegenden Längsträger des Transportgestellunterbaus verfahrbar sind und durch Wiederfüllen oder Entleeren der Luftfedern das Transportgestell aufnehmen oder absetzen können.

Während des Transportes ergibt sich die eingangs erläuterte Bruchgefahr für die Scheiben aus der Kurvenbeschleunigung. Die hierbei auftretenden Horizontalkräfte biegen die großflächigen Scheiben nach außen, wenn sie hiergegen nicht gesichert sind. Deswegen setzt die Erfindung ein Straßentransportfahrzeug für den Float-Glasscheibentransport als bekannt voraus, bei dem eine bordeigene Abstützung gegenüberliegender Längsflächen des auf dem Transportgestell stehenden und schräg nach innen geneigten Transportgutes vorgesehen ist. Diese Abstützung arbeitet mit mehreren Stützen, welche den Außenseiten des Transportgutes durch Zustellen auflegbar und durch Aufstellen von dem Transportgut wieder lösbar sind. Dadurch ist es möglich, auf transportgestelleigene Abstützungen der Außenflächen des Transportgutes weitgehend zu verzichten. Bei Glasscheiben ist das Anbringen dieser transportgestelleigenen Stützen eine gefährliche Arbeit, die zudem ein großes Maß an Handarbeitsaufwand bedingt. Mit dem vorbekannten Straßentransportfahrzeug werden diese Nachteile insbesondere dadurch vermieden, daß die Stützen an einem fahrzeugfesten Lenkergetriebe angeordnet sind und ihre Bewegungsenergie von druckmittelbetätigten Kolben-Zylinderanordnungen erhalten.

Bei dem vorbekannten Fahrzeug sind die Stützen jedoch an den Abtrieb eines Lenkergetriebes angelenkt, so daß sich die Stützen während der Auf- und Zustellbewegung der Abstützung mit ihren Auflagerflächen längs eines Kreisbogens bewegen. Mit dieser Getriebeausbildung wird angestrebt, die Stützen aus Gründen vermeintlicher Bruchgefahr der Scheiben dem Scheibenpaket zwar der jeweiligen Außenfläche des Transportgutes anzulegen, in dieser aber keinen in Richtung des Transportgestells wirkenden Stützdruck zu erzeugen, bzw. diesen zu vermeiden, insbesondere wenn die druckmittelbetätigten Kolben-Zylinderanordnungen hydraulisch sind und dadurch erhebliche Kräfte in beiden Richtungen des Schubkolbens erzeugen können.

Während der Kurvenfahrt erzeugen die sich nach außen durchbiegenden Scheiben über die Stützen auf den Abtrieb der Lenkergetriebe erhebliche Rückstelkräfte, welche den Antriebskräften der Kolben-Zylindereinheiten entgegengesetzt sind. Sind diese hydraulisch betätigt, geben die Kolben in den Zylindern nicht oder nicht nennenswert nach. Die unvermeidlichen Toleranzen in den Elementpaaren der Gelenke eines Lenkergetriebes und der in diesem auftretende Verschleiß führt jedoch im Getriebe zu Relativbewegungen der Getriebeglieder. Infolge der hierbei auftretenden, in Abheberichtung der Stützen wirkenden Bewegungen und der Größe der von dem Transportgut auf die Stützen selbst ausgeübten Druckkräfte tritt zwischen den Stützen und ihrer Oberfläche ein Kraftschluß ein. Dieser erzwingt bei Relativbewegungen im Lenkergetriebe eine Hubbewegung der außen liegenden Scheiben und deren Relativverschiebung gegenüber den inneren Scheiben der Scheibenpakete. Das führt zu mechanischen Beanspruchungen auf den sich bewegenden Scheibenoberflächen, die sich in Kratzern und Riefen auf diesen Flächen bzw. ihren Vertügungen zeigen. Solche Transportschäden lassen sich bisher kaum verhindern und bedeuten erhebliche wirtschaftliche Verluste.

Der Erfindung liegt die Aufgabe zugrunde, die beschriebenen Transportschäden auf einfache Weise zu verhindern. Zur Lösung dieser Aufgabe schlägt die Erfindung die Merkmale des Patentanspruches 1 vor. Weitere Merkmale der Erfindung ergeben sich aus den Unteransprüchen.

Gemäß der Erfindung werden die Getriebe der Stützen auf wenige Getriebeglieder reduziert. Es hat sich nämlich herausgestellt, daß beim Zustellen der Stützen zur Transportsicherung die Scheibenpakete mit erhöhtem Druck belastet werden können, ohne daß Brüche auftreten.

Die Stützenbewegung folgt bei der Erfindung der Geradführung durch das hohle Gelenkprisma des Schubgelenkes, welches das fahrzeugfeste Element bildet. Das relativ dazu bewegliche Vollprisma trägt dagegen das Kugelgelenk, welches infolge seiner allseitigen Beweglichkeit Überlastungen des Scheibenpaketes mit örtlich überhöhten Drücken verhindert und außer einem über die Stützfläche ausgeglichenen Druck auch dazu dienen kann, das Schubgelenk nur in Schubrichtung zu belasten. Das erfindungsgemäße Getriebe hat bei hydraulischem Antrieb infolge seines Aufbaus aus wenigen Getriebegliedern und durch den auf die Außenfläche des Transportgutes ausgeübten Zustelldruck keine Rückstellmöglichkeit bei Belastungen durch das Transportgut, wie sie insbesondere bei der Kurvenfahrt auftreten. Daher führen die Glasscheiben von Glasscheibenpaketen beim Transport mit dem erfindungsgemäßen Fahrzeug auch keine Relativbewegungen aus, so daß die Transportschäden verhindert werden.

Nach bevorzugter Ausführungsform der Erfindung, die im Patentanspruch 2 wiedergegeben ist, dient die Antriebskolben-Zylinderanordnung jeder Stütze als Schubgelenk. Mit diesem Schubgelenk ist der Zylinder das Hohlprisma, welches winkelsteif am Fahrzeug befestigt ist, während der Kolben das Vollprisma des Schubgelenkes bildet und über eine an einem Ende des Zylinders herausgeführte Kolbenstange das eine Element des Kugelgelenkes (Kugelpfanne oder Vollkugel) bildet, welches die Verbindung zur Stütze herstellt.

Bei einer solchen Ausführungsform soll bevorzugt nach den Merkmalen des Patentanspruches 3 eine Justierung vorgenommen werden, welche Verbiegungen der Kolbenstange oder Verkantungen des als Vollprisma dienenden Schubkolbens im Zylinder verhindert. Dazu ist es erforderlich, die Schubrichtung annähernd rechtwinklig zur Fahrzeuglängsebene und zur Tafel- bzw. Scheibenebene zu orientieren.

Beim Floatglas-Scheibentransport gelingt das erfindungsgemäß deswegen hinreichend genau, weil die Transportgestelle ohne größere Toleranzen in der Transportgestellaufnahme des Fahrzeuges sitzen und die Winkel der Scheibenpakete in allen Fällen annähernd die gleichen sind, wodurch die Justierung der Schubrichtung gegenüber dem Fahrzeug erfolgen kann.

Allerdings empfiehlt es sich, Korrekturmöglichkeiten vorzusehen, wie sie im Anspruch 4 vorgeschlagen werden.

Die Einzelheiten, weiteren Merkmale und andere Vorteile der Erfindung ergeben sich aus der nachfolgenden Beschreibung einer Ausführungsform anhand der Figuren in der Zeichnung; es zeigen

Fig. 1 im Querschnitt den Laderaum eines Straßentransportfahrzeuges gemäß der Erfindung mit aufgenommenem Transportgestell für großflächige Float-Glasscheiben im Querschnitt,

Fig. 2 das Fahrgestell und den Aufbau des erfindungsgemäßen Straßentransportfahrzeuges in Draufsicht,

Fig. 3 die Einzelheiten der Darstellung der Fig. 1,

Fig. 4 eine abgeänderte Ausführungsform der Transportsicherung,

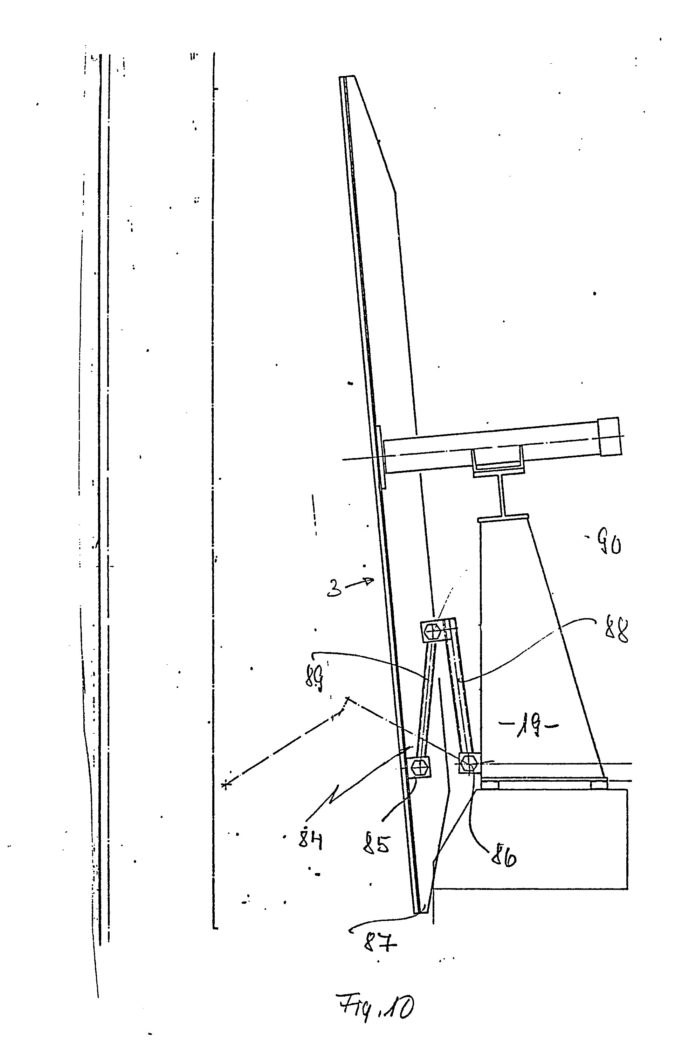

Fig. 5 die Stütze der Getriebe in der Ausführungsform der Fig. 3 in Ansicht,

Fig. 6 eine Einzelheit der Fig. 3, die bei VI herausgezeichnet ist,

Fig. 7 das Schubgelenk gemäß der Erfindung unten in Draufsicht und in teilweisem Schnitt, oben in Ansicht und in abgebrochener Darstellung,

Fig. 8 die Befestigung des Schubgelenks in Ansicht,

Fig. 9 den Gegenstand der Fig. 8 in Stirnansicht und

Fig. 10 in der Fig. 3 entsprechender Darstellung eine stabilisierte Stütze.

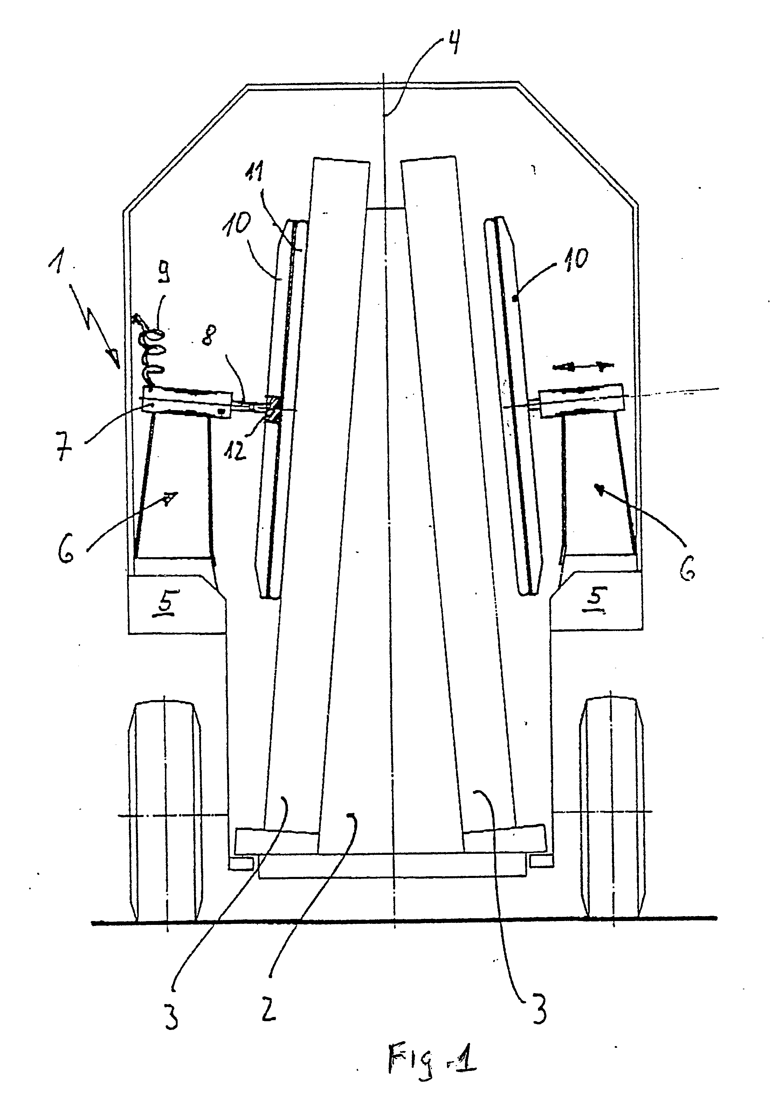

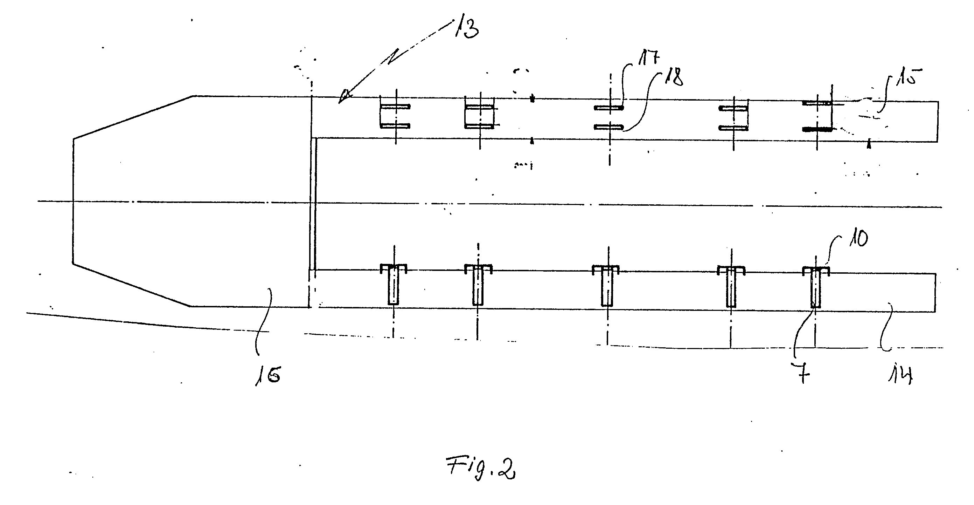

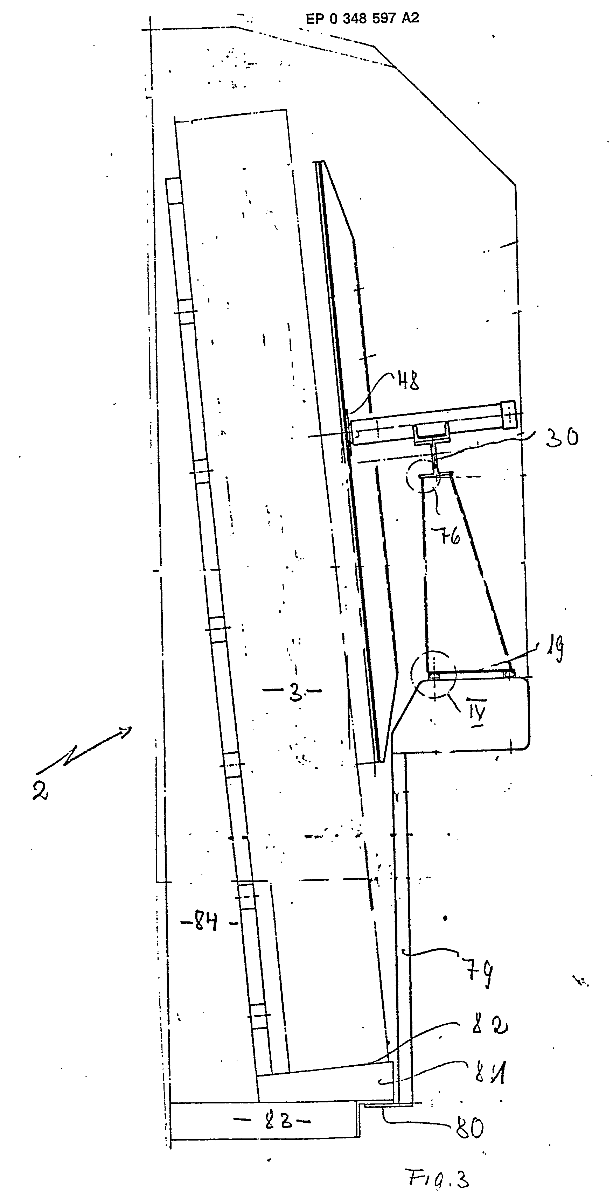

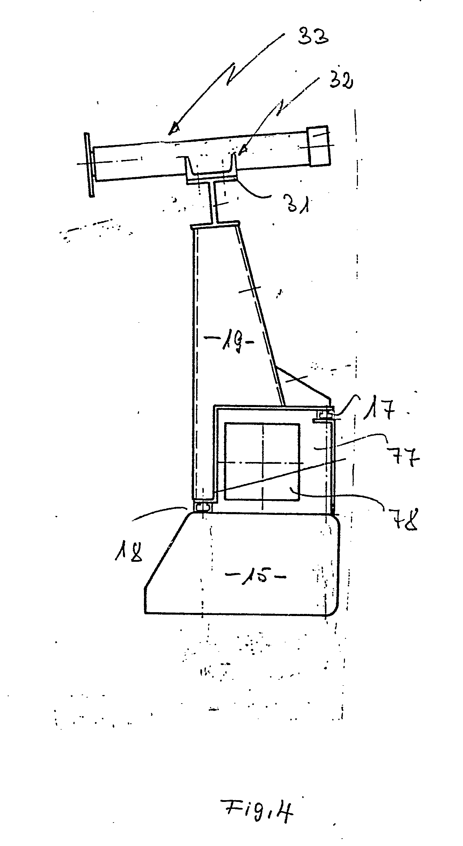

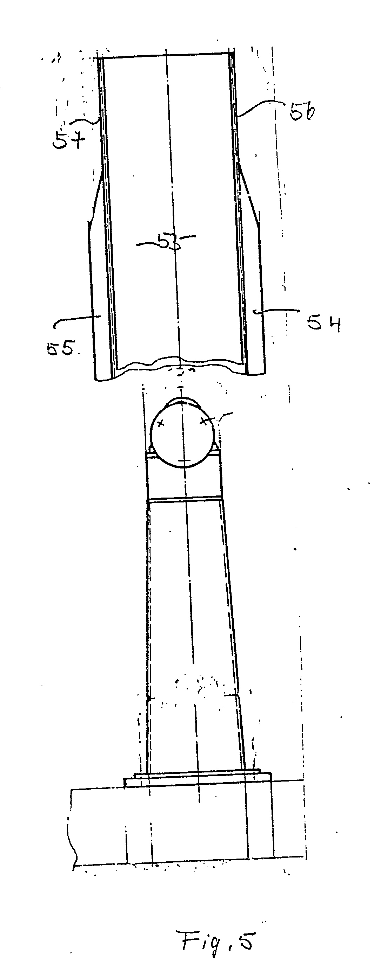

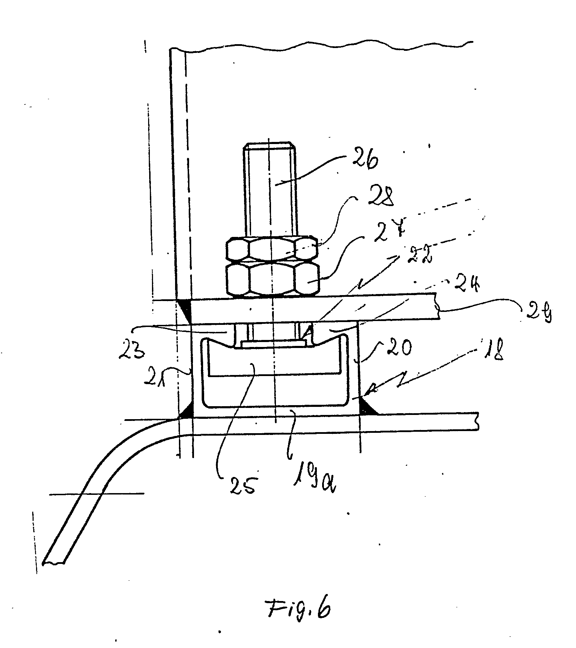

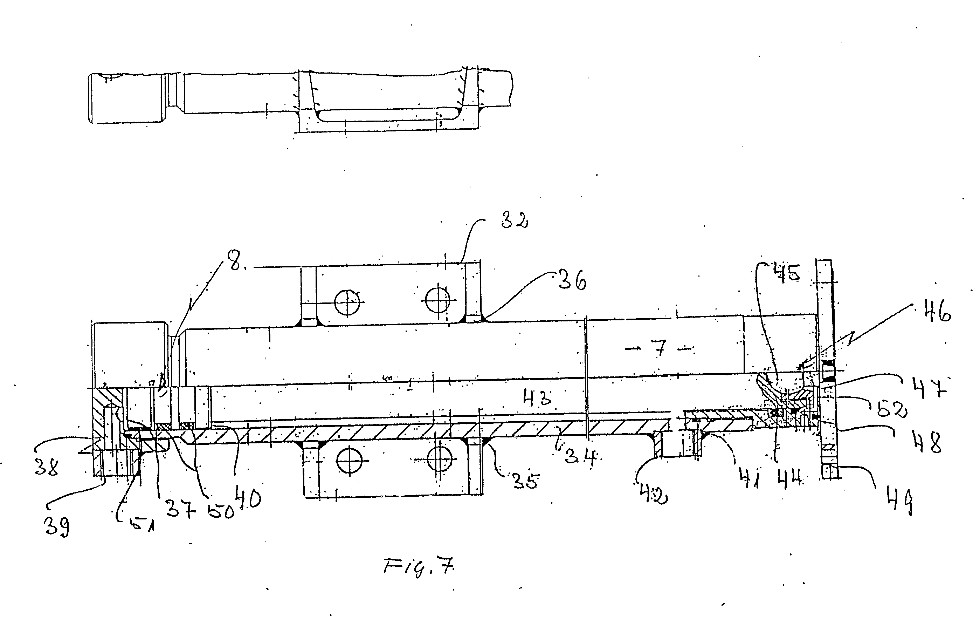

Gemäß der Darstellung der Fig. 1 ist das Straßentransportfahrzeug (1) ein Aufliegeranhänger, dessen Zugmaschine nicht wiedergegeben ist. Im Laderaum ist ein aufgeladenes Transportgestell (2) dargestellt, welches mit Glasscheibenpaketen (3) beladen ist. Die Pakete stehen auf dem Transportgestellunterbau und sind schräg nach innen zur senkrechten Längsmittelebene (4) des Fahrzeuges (1) geneigt.

Zu beiden Seiten des Transportgestells ist eine bordeigene Transportsicherung (6) eingezeichnet.

Kolbenzylinderanordnungen, deren Zylinder mit (7) und deren Kolben mit (8) bezeichnet sind, werden von einer Druckmittelquelle über flexible Schläuche (9) mit dem Druckmittel beaufschlagt und sind doppelt wirkend ausgebildet.

Der Kolben (8) bewegt eine Stütze (10), deren wirksame Anpreßfläche einen reibungserhöhenden und schützenden Belag (11) aufweist. Die Kolbenstange (8) ist bei (12) an die Rückseite der Stütze (10) angeschlossen.

In der rechten Hälfte der Fig. 1 ist die Stütze aufgestellt, wodurch diese zum Auf- und Abladen freigegeben ist. In der linken Hälfte der Fig. 1 ist dagegen die Stütze (10) zugestellt und mit ihrem reibungserhöhenden Belag (11) der Außenseite des Glasscheibenpaketes (3) mit einem Überdruck angelegt.

Hierbei ist die Anordnung so getroffen, daß die von dem Zylinder (7) gebildete Geradführung des Kolbens (8) im rechten Winkel zur Oberfläche des Glasscheibenpaketes (3) angeordnet ist. Auf diese Weise werden lediglich senkrechte Kräfte auf das Glasscheibenpaket ausgeübt, wobei die Reaktionskräfte in der Kolbenstange keine Biegemomente erzeugen.

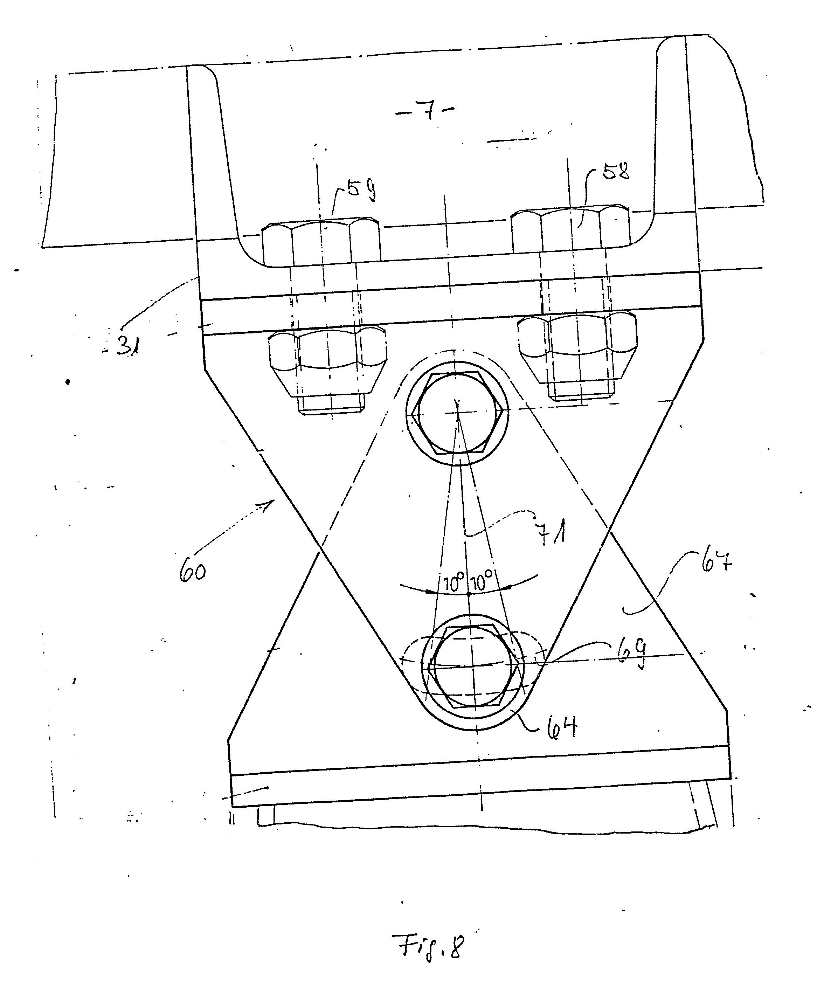

Das Fahrgestell (13) des Straßentransportfahrzeuges hat einen U-förmigen Rahmen, dessen die beiden Schenkel (14, 15) verbindender Steg (15) den Schwanenhals des Aufliegers bildet, unter dem die Sattelkupplung angeordnet ist. Nicht dargestellt ist eine Türe, welche die Rückseite des Fahrzeuges verschließt und außerdem die Enden der Fahrgestellschenkel (14, 15) zusammenhält. Im oberen Teil der Darstellung der Fig. 2, nämlich am Schenkel (15), sind parallele Schienen (17, 18) wiedergegeben, auf denen die im Zusammenhang mit Fig. 1 beschriebenen Stützen (6) in Längsrichtung des Fahrzeuges verschoben und eingestellt werden können: Auf diese Weise läßt sich unterschiedlichen Längserstreckungen der Scheibenpakete in dem Sinne Rechnung tragen, daß eine Abstützung der Scheibenoberfläche auf einer hinreichenden Länge und in wählbaren Abständen erzielt wird. Im unteren Teil, d.h. auf dem Schenkel (14) des Chassis (13) sind dagegen die Kolbenzylindereinheiten (7, 8) wiedergegeben und zwar mit ihren Stützen (10).

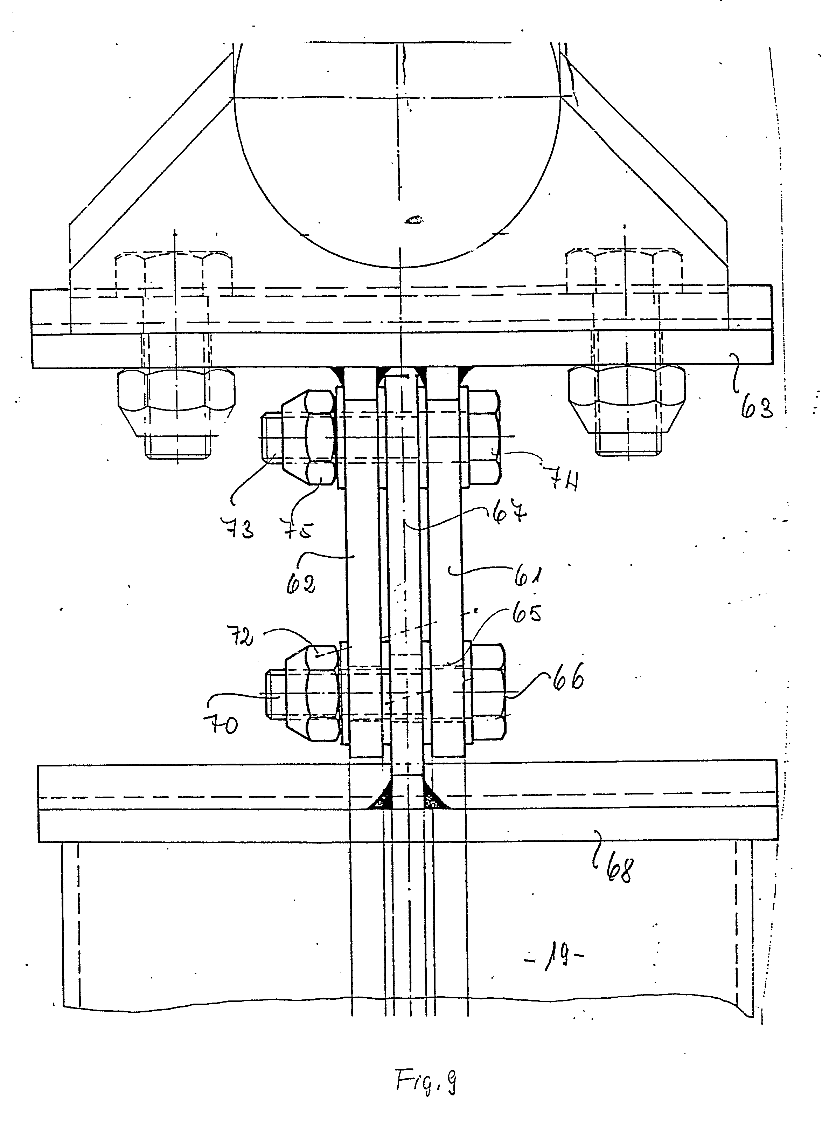

Nach der Darstellung der Fig. 3 ist auf jedem Schienenpaar (17, 18) eine Konsole (19) verschieblich und feststellbar. Dazu werden kastenprofilartige Schienen verwendet, wie am Beispiel der Schiene (18) in Fig. 6 dargestellt. Die Schienen weisen einen Steg (19a), zwei parallele Schenkel (20, 21) und einen Längsschlitz (22) auf. Der Längsschlitz wird von verstärkten Flanschen (23, 24) begrenzt, die zur Verspannung mit einer rechteckigen Platte (25) dienen, die am Ende einer Spindel (26) befestigt ist. Mit Hilfe einer Mutter (27) und einer Kontermutter (28) kann die Konsole mit ihrem Boden (29), den die Spindel (26) durchdringt, mit der flachen Oberseite der verstärkten Flanschen (23, 24) in jeder beliebigen Stellung längs der Schiene (18) festgestellt werden. Auf der Konsolenoberseite sitzt ein T-Profilabschnitt (30), dessen Flansch (31) (Fig. 4) ein an beiden Schenkeln ausgschnittenes U-Profil (32) trägt, das mit seinem Steg mit dem Flansch (31) des T-Profils verschraubt ist. Die Kolbenzylindereinheit (33) bildet den Hauptteil eines Getriebes, mit dessen Hilfe die in Fig. 4 nicht wiedergegebene Stütze auf- und zugestellt wird. Dazu ist (Fig. 7) die Zylinderwand (34) mit vier Kehlnähten (35) im Ausschnitt (36) des U-Profils (32) verschweißt. Der Zylinder hat eine zur Kolbenfläche (37) führende Bohrung (38) mit Anschlußnippel (39) und eine zur Kolbenringfläche (40) führende Bohrung (41) mit Anschlußnippel (42). Je nach Zuführung und Abführung des Druckmittels durch die Bohrungen (38 und 41) bewegt sich der Kolben vor und zurück im Zylinder (7).

Die Kolbenstange (43) ist an ihrem freien Ende als Kugelpfanne (44) für eine Vollkugel (45) ausgebildet. Die Teile (44 und 45) bilden die Elemente eines Kugelgelenks (46), mit dem über einen Vollzylinder (47) eine Anschlußplatte (48) verbunden ist. Die Anschlußplatte trägt auf einem Lochkreis Bohrungen (49) für Verbindungsschrauben, die in Fig. 7 nicht wiedergegeben sind.

Der Kolben (8) trägt Ringdichtungen (50) und eine Führungsbuchse (51). Die Führungsbuchse (51) verhindert Verkantungen des Kolbens (8) im Zylinder (7). Infolgedessen ergibt sich eine Geradführung des Kolbens (8) und der Kolbenstange (43), so daß der Kolben das Vollprisma eines Schubgelenkes bildet, das mit (33) in Fig. 4 bezeichnet ist; das Hohlprisma des Schubgelenkes wird dagegen vom Zylinder (7) gebildet. Die Kolbenstange (43) stellt die Verbindung zu dem Kugelgelenk (46) dar und bildet gleichzeitig ein Element des Kugelgelenks. Eine aus einem Elastomer bestehende Kugelpfannenabdichtung (52) hält die Anschlußplatte (48) in ihrer Normalstellung, läßt aber Bewegungen der Kugel in der Kugelpfanne zu.

Die Platte (48) ist mit der Rückseite des Trägers (53) verschraubt, der auf dem größeren Teil seiner Länge U-förmig profiliert ist. Die Stege (54, 55) schließen Anlageleisten (56, 57) ein, die mit der Glasscheibenoberfläche in Berührung kommen.

Bei der Ausführungsform nach den Fig. 8 und 9 ist das U-Profil (31), in dem der Zylinder (7) fest ist, an jeder Seite mit Hilfe eines Schraubenpaares (58, 59) mit einem Gabelkopf (60) verschraubt. Der Gabelkopf wird von zwei parallelen Blechen (61, 62) gebildet, die an der Unterseite einer Verbindungsplatte (63) angeschweißt sind. Die Bleche (61 und 62) sind kongruent. Sie weisen einen im wesentlichen dreieckförmigen Umriß auf, wobei im Scheitel (64) des Dreiecks eine Bohrung (65) für eine Feststellschraube (66) vorgesehen ist, welche die beiden Dreieckplatten (61 und 62) des Gabelkopfes und eine ihnen entsprechende, jedoch umgekehrt angeordnete Platte (67) durchdringt. Die Platte (67) ist auf der Oberseite (68) der Konsole (19) befestigt.

Die Feststellschraube (66) durchdringt eine gekrümmte Aussparung (69) (Fig. 8), welche den Gewindebolzen (70) der Feststellschraube (66) über einen Kreisbogen führt, der einem Winkel von 10 Grad nach jeder Seite zur Senkrechten entspricht, welche mit (71) in Fig. 8 bezeichnet ist. Hierzu bewegt sich bei gelöster Mutter (72) der Feststellschraube (66) der Gabelkopf (60) um die Achse eines Gelenkbolzens (73), welcher von einer Schraube (74) gebildet wird, deren Mutter (75) zum Feststellen des Drehgelenkes dient. Mit Hilfe der beschriebenen Gabelkopfanordnung kann der Winkel verändert werden, den die Richtung der Geradführung des Schubgelenkes der Horizontalen einschließt. Dieser Winkel ist bei (76) in Fig. 3 gezeichnet und beträgt ca. 5 Grad. Er wird mit der Feststellschraube fixiert.

Auf diese Weise führen nach außen gerichtete Verformungen der außen liegenden Scheibe des Paketes (3) nicht zu Biegemomenten in der Kolbenstange des Schubgelenkes (33).

Bei der Ausführungsform nach Fig. 4 sitzen die Schienen (17 und 18) in unterschiedlicher Höhe auf einem Kastenträger (77), der Teil der Fahrgestellkonstruktion des Schenkels (14 bzw. 15) ist. Der Kastenträger ist hohl. Sein Innenraum (78) kann als Druckmittelbehälter für Preßluft oder für ein hydraulisches Medium verwendet werden.

Jeder Fahrgestellschenkel trägt die Seitenwände (79) eines Tiefbettes, welche an Längsleisten (80) enden. Die beiden parallelen Längsleisten (80) beider Fahrgestellschenkel (14, 15) bilden die Aufnahme für hohl liegende Träger (81) des Transportgestells (2). Auf ihrer Oberseite (82) ist das Scheibenpaket (3) abgestützt. Sie sind Teil der Unterkonstruktion (83) des Transportgestells, dessen Aufbau (84) im Querschnitt die A-Form aufweist.

Die Ausführungsform nach Fig. 10 verhindert eine unbeabsichtigte Drehung der Stütze (3) in der Zeichenebene und stabilisiert sie in der Schubrichtung. Dazu ist ein Knicklenker (84) über Horizontalgelenke (85, 86) einerseits an die Konsole (19) und andererseits an die Stütze (3) in unmittelbarer Nähe des unteren Stützenendes (87) angelenkt. Der Stabilisator besteht aus Kastenprofilabschnitten (88, 89), die über ein Horizontalgelenk (90) miteinander verbunden sind. Die Gelenke lassen eine Lenkerdrehung nur in der Schubebene zu, sparen also die Kugeldrehung im Schubgelenk in allen anderen Ebenen.

## Ansprüche

1. Straßentransportfahrzeug mit Transportgestellaufnahme für großflächige Tafeln, insbesondere Glasscheiben und bordeigener Transportsicherung durch Abstützung gegenüberliegender Langsflächen des auf dem Transportgestell stehenden und schräg nach innen geneigten Transportgutes mit Hilfe mehrerer, den Außenseiten des Transportgutes durch Zustellen auflegbarer und durch Aufstellen lösbarer Stützen, welche den Abtrieb eines fahrzeugfesten Getriebes bilden, denen Bewegungsenergie vorzugsweise durch druckmittelbetätigte Kolben-Zylinderanordnungen zugeführt wird, dadurch gekennzeichnet, daß jede Stütze (10, 11) mit einem Schubgelenk (33) ein Getriebe bildet, in dem das hohle Prisma (7) des Schubgelenks (33) fahrzeugfest und das Vollprisma (8) über ein Kugelgelenk (46) an die Stütze (10, 11) angelenkt ist.

2. Straßentransportfahrzeug nach Anspruch 1, dadurch gekennzeichnet, daß als Schubgelenk (33) die Antriebskolben-Zylinderanordnung (7, 8) dient, die mit ihrem Zylinder (7) das Hohlprisma bildet, welches winkelsteif am Fahrzeug (1) befestigt ist, und den mit einer Geradführung (51) versehenen Kolben, das Vollprisma des Schubgelenkes (33) bildenden Kolben führt, wobei die winkelsteif mit dem Kolben (8) verbundene Kolbenstange (43) an ihrem freien Ende das Kugelgelenk (46) aufweist.

3. Straßentransportfahrzeug nach einem der Ansprüche 1 oder 2, dadurch gekennzeichnet, daß die Schubrichtung des Schubgelenkes (33) annähernd rechtwinklig zur Fahrzeuglängsebene (4) zur Tafel- bzw. Scheibenebene orientiert ist.

4. Straßentransportfahrzeug nach einem oder mehreren der Ansprüche 1 bis 3, dadurch gekennzeichnet, daß zur Korrektur der Schubrichtung die Befestigung des Hohlprismas (7) des Schubgelenkes (33) am Fahrzeug (1) winkelverstellbar ist.

5. Straßentransportfahrzeug nach einem der Ansprüche 1 bis 4, dadurch gekennzeichnet, daß die im Gelenk drehbare Vollkugel (45) mit Hilfe einer Gummidichtung (52) in der Kugelpfanne (44) gesperrt ist.

6. Straßentransportfahrzeug nach einem oder mehreren der Ansprüche 1 bis 5, dadurch gekennzeichnet, daß wenigstens einige Stützen (3) an ihrem jeweils unteren Ende durch einen Knicklenker mit der Konsole (19) verbunden und in der Schubebene geführt sind.

7. Straßentransportfahrzeug nach einem oder mehreren der Ansprüche 1 bis 6, dadurch gekennzeichnet, daß jede Stütze (10) mit einem reibungserhöhenden Belag (11) versehen ist.

8. Straßentransportfahrzeug nach einem oder mehreren der Ansprüche 1 bis 7, dadurch gekennzeichnet, daß zur gestellfesten Anordnung dienende Konsolen (19) jedes Getriebes in Längsrichtung des Fahrzeuges (8) ver- und einstellbar sind.

9. Straßentransportfahrzeug nach einem oder mehreren der Ansprüche 1 bis 8, dadurch gekennzeichnet, daß die Antriebskolbenzylindereinheit (7, 8) die Stütze (10, 11) dem Transportgut mit Überdruck aufliegt.

Fig -1

Fig.2

Fig.3

Fig. 4

57

56

53

55

54

Fig. 5

Fig. 6

Fig. 7

Fig. 8

Fig.9

Fig. 10